# FASCICULE DE BREVET EUROPEEN

(11) **EP 4 553 346 B1**
(45) Date de publication et mention de la délivrance du brevet: **13.05.2026**
(21) Numéro de dépôt: 24207992.9
(22) Date de dépôt: 22.10.2024
(51) Int. Cl.: F16H 63/34, F16H 63/38

(54) **MÉCANISME DE BLOCAGE**
VERRIEGELUNGSMECHANISMUS
LOCKING MECHANISM

(30) Priorité: 07.11.2023 FR 2312098; 07.11.2023 FR 2312605
(43) Date de publication de la demande: 14.05.2025
(73) Titulaire: VALEO EMBRAYAGES, 80009 Amiens (FR)
(72) Inventeur: NERRIERE, Adrien, 80009 AMIENS (FR)
(74) Mandataire: Valeo Powertrain Systems

(56) Documents cités:
- DE-A1- 102007 007 681
- DE-A1- 102020 213 568
- KR-A- 20100 077 493
- US-A1- 2018 112 774
- US-A1- 2022 381 341

## Description

### Domaine technique

La présente invention concerne un mécanisme de blocage pour le blocage en rotation d'un arbre d'une chaîne de transmission d'un appareil de mobilité, tel qu'un véhicule automobile par exemple.

### Arrière-plan technologique

Des mécanismes de blocage sont utilisés, par exemple, comme frein de stationnement afin de sécuriser un véhicule automobile à l'arrêt. Dans un tel cas, ils permettent de bloquer en rotation un arbre de transmission du véhicule automobile. De tels mécanismes de blocage sont notamment utilisés dans les véhicules automobiles à transmission automatique, dans les véhicules hybrides ou les véhicules électriques.

Il est connu, notamment du document US2018/0112774, des mécanismes de blocage comprenant un cliquet mobile équipé d'un doigt de verrouillage et monté pivotant sur un carter de transmission entre une position libérée et une position de verrouillage dans laquelle le doigt de verrouillage est inséré dans un évidement de verrouillage solidaire en rotation de l'arbre de transmission à bloquer. Le mécanisme de blocage comporte en outre un dispositif de poussée guidé en translation sur le carter de transmission et comportant un suiveur de came qui coopère avec une surface de came du cliquet de sorte qu'un mouvement de translation du dispositif de poussée entraîne le pivotement du cliquet entre la position libérée et la position de verrouillage.

Un levier d'actionnement permet d'actionner le déplacement du dispositif de poussée. Le levier d'actionnement est monté pivotant sur le carter de transmission et entraîné en rotation, directement ou indirectement, par l'arbre rotor d'un moteur électrique.

Le plus souvent, le levier d'actionnement comporte un pourtour externe disposant d'une première et d'une deuxième encoche de positionnement angulaire. Un organe de positionnement fixé sur le carter de transmission comporte un dispositif élastique, par exemple sous la forme d'une lame flexible, appuyant sur le pourtour externe du levier d'actionnement. L'organe de positionnement est configuré pour s'engager dans la première encoche de positionnement angulaire lorsque le cliquet mobile est en position de verrouillage, et dans la deuxième encoche de positionnement angulaire lorsque le cliquet mobile est en position libérée.

L'organe de positionnement permet ainsi de maintenir de manière stable et précise la position du mécanisme de blocage en position libérée et/ou en position de verrouillage.

Une telle structure du mécanisme de blocage pose plusieurs problèmes techniques :
- En premier lieu, la compacité doit être améliorée afin de pouvoir loger le mécanisme de blocage dans les espaces alloués très restreints des transmissions récentes, notamment des transmissions pour véhicule électrique.
- En second lieu, l'assemblage doit être simplifié. En particulier, les différents composants du mécanisme de blocage peuvent être fixés sur le carter de transmission suivant des axes de fixation non parallèles entre eux, ce qui induit un assemblage de ceux-ci en plusieurs opérations complexes.
- Enfin, ces améliorations de la compacité et de l'assemblage doivent pouvoir être obtenues tout en conservant une résistance mécanique suffisante de l'organe de positionnement qui est soumis aux sollicitations mécaniques survenant lors des phases d'arrêt du véhicule assurées par le mécanisme de blocage.

### Résumé

Dans tout ce qui suit, les adjectifs numéraux ordinaux sont utilisés pour différencier les caractéristiques. Ils ne définissent pas la position d'une caractéristique. Par conséquent, par exemple, une troisième caractéristique d'un produit ne signifie pas que le produit possède une première et/ou une deuxième caractéristique.

Une idée à la base de l'invention est un mécanisme de blocage destiné à bloquer en rotation un arbre d'un véhicule.

Une idée à la base de l'invention est un mécanisme de blocage qui permet de résoudre un ou plusieurs problèmes techniques de l'art antérieur, par exemple les problèmes susmentionnés.

L'invention concerne un mécanisme de blocage apte à être monté dans un carter de transmission pour bloquer en rotation un arbre d'un véhicule équipé d'au moins un évidement de verrouillage, le mécanisme de blocage comprenant :
- un cliquet mobile comprenant un doigt de verrouillage, le cliquet mobile étant monté pivotant autour d'un axe de pivotement entre une position de verrouillage dans laquelle le doigt de verrouillage est engagé dans l'évidement de verrouillage et une position libérée dans laquelle le doigt de verrouillage est désengagé dudit évidement de verrouillage, le cliquet mobile comprenant une surface de came ;
- un dispositif de poussée comportant un suiveur de came apte à se déplacer sur la surface de came afin de déplacer le cliquet mobile de la position libérée vers la position de verrouillage ;
- un levier d'actionnement monté pivotant autour d'un axe d'actionnement configuré pour déplacer le dispositif de poussée, le levier d'actionnement comprenant un pourtour externe comportant une première encoche de positionnement angulaire et une deuxième encoche de positionnement angulaire ; et
- un organe de positionnement coopérant avec le pourtour externe du levier d'actionnement, l'organe de positionnement comportant une surface d'appui configurée pour s'engager dans la première encoche de positionnement angulaire lorsque le cliquet mobile est en position de verrouillage et dans la deuxième encoche de positionnement angulaire lorsque le cliquet mobile est en position libérée ;

l'organe de positionnement comportant une lame flexible exerçant un effort, directement ou indirectement, sur le pourtour externe du levier d'actionnement, la lame flexible comprenant une forme repliée sur elle-même pour constituer en vue de profil une forme en V.

Par forme en V, on entend que la lame flexible présente sensiblement en vue de profil la forme de la lettre V en majuscule, la forme de la lettre en V en majuscule comprenant deux branches inclinées entre elles d'un angle compris entre 0° et 80°, l'intersection des deux branches étant pointue ou rayonnée.

Au sens de la présente demande :
- « axialement » signifie « parallèlement à l'axe d'actionnement»;
- « radialement » signifie « le long d'un axe appartenant à un plan orthogonal à l'axe d'actionnement et coupant cet axe d'actionnement»;
- « angulairement » ou « circonférentiellement » signifie « autour de l'axe d'actionnement »;
- les termes "externe" et "interne" sont utilisés pour définir la position relative d'un composant par rapport à l'axe de rotation pour lequel il est concentrique, un composant proche dudit axe est ainsi qualifié d'interne par opposition à un composant externe situé radialement en périphérie;
- deux pièces sont dites « fixées » ou « rigidement solidaires » lorsqu'elles sont en permanence immobilisées l'une par rapport à l'autre, cette immobilisation pouvant résulter d'une fixation de la première pièce sur la deuxième pièce directement ou par l'intermédiaire d'une ou plusieurs pièces intermédiaires.

La lame flexible est une solution simple et économique qui permet une détermination aisée d'une géométrie compatible avec un espace disponible restreint tout en assurant une raideur et une résistance mécanique suffisante pour maintenir le mécanisme de blocage en position.

La forme en V permet d'obtenir, dans un volume disponible restreint, une lame flexible ayant une partie fléchissante de longueur importante. En comparaison avec les lames flexibles ayant une partie fléchissante plate ou faiblement pliée de l'art antérieur, la lame en V peut permettre d'obtenir une raideur et une résistance mécanique équivalente, tout en occupant un encombrement plus faible, typiquement une réduction de 20 à 60 % d'encombrement circonférentiellement.

Selon une caractéristique supplémentaire de l'invention, la forme en V comprend une première paroi plane et une deuxième paroi plane, un angle de pliage étant établi entre la première paroi plane et la deuxième paroi plane, l'angle de pliage étant compris entre 0° et 80°, l'angle de pliage étant compris de préférence entre 0° et 40°.

L'angle de pliage selon cette dernière caractéristique permet de minimiser l'encombrement de la lame flexible radialement. La valeur d'angle choisie permet également d'ajuster la valeur de l'effort qu'exerce la lame flexible sur le pourtour externe du levier d'actionnement.

Selon une caractéristique supplémentaire de l'invention, une paroi incurvée relie la première paroi plane et la deuxième paroi plane.

Selon une caractéristique supplémentaire de l'invention, la paroi incurvée a un rayon de courbure compris entre 2 mm et 10 mm.

Selon une caractéristique supplémentaire de l'invention, un rayon de courbure de la paroi incurvée, une épaisseur de la lame flexible et un ratio égal au rapport entre le rayon de courbure et l'épaisseur de la lame flexible sont établis, le ratio étant compris entre 2 et 8.

La paroi incurvée telle que définie suivant ces trois dernières caractéristiques permet d'adapter la raideur de la lame flexible tout en limitant les concentrations de contraintes mécaniques dans celle-ci.

Selon une caractéristique supplémentaire de l'invention, la première paroi plane et la deuxième paroi plane sont parallèles à l'axe d'actionnement.

Selon une caractéristique supplémentaire de l'invention, l'organe de positionnement comporte un élément roulant agencé sur la lame flexible, l'élément roulant étant configuré pour rouler sur le pourtour externe du levier d'actionnement.

L'élément roulant permet d'améliorer la durabilité du mécanisme de blocage en limitant les usures et les frottements relatifs entre le pourtour externe du levier d'actionnement et la lame flexible.

Avantageusement, l'élément roulant peut être un rouleau cylindrique. Une forme complémentaire peut être alors aménagée sur l'extrémité de la lame flexible afin de constituer une liaison pivot entre le rouleau cylindrique et la lame flexible.

Selon une caractéristique supplémentaire de l'invention, la lame flexible comprend une première patte de fixation pliée et une deuxième patte de fixation pliée, les première et deuxième pattes de fixation pliées étant pliées à un angle de 90° à partir d'une première portion de la lame flexible et positionnées axialement de part et d'autre de ladite première portion de la lame flexible.

Grâce à cette dernière caractéristique, la lame flexible dispose d'une zone de fixation de part et d'autre de sa partie fléchissante, ce qui a pour effet de répartir de façon homogène la reprise des efforts dans la lame flexible et ainsi réduire les contraintes mécaniques dans celle-ci.

Selon une caractéristique supplémentaire de l'invention, la première patte de fixation pliée est pliée dans un sens opposé à la deuxième patte de fixation pliée.

Cette dernière caractéristique permet à ce que la première patte de fixation pliée ne soit pas en vis-à-vis axialement de la deuxième patte de fixation pliée. Ainsi la première patte de fixation pliée n'entrave pas le passage d'un outil de fixation pour accéder à la deuxième patte de fixation pliée, et inversement. L'accès à la première et à la deuxième patte de fixation pliée pour la fixation de l'organe de positionnement s'en trouve simplifié.

Selon une caractéristique supplémentaire de l'invention, la première patte de fixation pliée et la deuxième patte de fixation pliée sont décalées l'une de l'autre axialement dans une direction parallèle à l'axe d'actionnement.

Grâce à cette architecture, l'assemblage du levier d'actionnement et de l'organe de positionnement est effectué suivant des axes parallèles. Ils peuvent donc être aisément montés ensemble pendant la même opération d'assemblage. Le décalage axial de la première patte de fixation pliée par rapport à la deuxième patte de fixation pliée simplifie l'assemblage de l'organe de positionnement en le réalisant de façon séquentielle, avec dans un premier temps un pré-positionnement via la première patte de fixation pliée, la première patte de fixation pliée ayant par exemple un trou pour s'insérer sur une goupille de centrage fixée au carter de transmission, puis dans un second temps une immobilisation complète via la deuxième patte de fixation pliée, au moyen par exemple d'une vis liant la deuxième patte de fixation pliée au carter de transmission.

Selon une caractéristique supplémentaire de l'invention, le mécanisme de blocage comprend :
- un premier moyen de fixation, notamment une goupille de centrage, coopérant avec la première patte de fixation pliée pour bloquer le déplacement de l'organe de positionnement dans un plan perpendiculaire à l'axe d'actionnement ; et
- un deuxième moyen de fixation, notamment une vis, coopérant avec la deuxième patte de fixation pliée pour bloquer le déplacement de l'organe de positionnement suivant un axe parallèle à l'axe d'actionnement.

La fixation de l'organe de positionnement selon cette dernière caractéristique peut être réalisée par rapport à tout type de composant sur lequel le mécanisme de blocage peut être monté, notamment le carter de transmission.

Ainsi la fixation de l'organe de positionnement est réalisée de manière isostatique. Autrement dit, tous les degrés de liberté de déplacement de l'organe de positionnement sont bloqués, tout en garantissant un assemblage aisé sans risque de déformation de composants.

Selon une caractéristique supplémentaire de l'invention, la patte de fixation pliée comporte une première découpe, de préférence circulaire, configurée pour être centrée et ajustée sur une goupille de centrage, un premier jeu diamétral étant défini entre la découpe circulaire et la goupille de centrage, de préférence le premier jeu diamétral étant compris entre 0,05 et 0,2 mm.

Selon une caractéristique supplémentaire de l'invention, la deuxième patte de fixation pliée comporte une deuxième découpe, de préférence circulaire, configurée pour coopérer avec le corps d'une vis, un deuxième jeu diamétral étant défini entre la deuxième découpe et le corps de la vis, le deuxième jeu diamétral étant supérieur au premier jeu diamétral, de préférence le deuxième jeu diamétral étant supérieur à 0,5 mm.

Grâce à cette dernière caractéristique, le risque d'impossibilité d'assemblage du fait des tolérances de fabrication des composants est supprimé.

Selon une caractéristique supplémentaire de l'invention, l'organe de positionnement est fixé sur le carter de transmission.

Selon une caractéristique supplémentaire de l'invention, le levier d'actionnement est monté pivotant sur le carter de transmission.

Selon une caractéristique supplémentaire de l'invention, le cliquet mobile est monté pivotant sur le carter de transmission.

Selon une caractéristique supplémentaire de l'invention, le carter de transmission comporte des surfaces d'appui positionnées par complémentarité de forme en vis-à-vis des première et deuxième pattes de fixation pliées de l'organe de positionnement.

Selon une caractéristique supplémentaire de l'invention, la lame flexible a une forme configurée pour laisser libre un passage suivant un axe parallèle à l'axe d'actionnement permettant l'assemblage du premier et du deuxième moyen de fixation.

Cette dernière caractéristique permet de définir la forme générale de la lame flexible afin qu'aucune partie de celle-ci n'entrave le passage d'un outil de fixation. L'accès à la première et à la deuxième patte de fixation pliée pour la fixation de l'organe de positionnement s'en trouve simplifié.

Selon une caractéristique supplémentaire de l'invention, l'axe d'actionnement du levier d'actionnement est parallèle à l'axe de pivotement du cliquet mobile.

Grâce à cette caractéristique, l'assemblage peut être encore plus simplifié car tous les composants du mécanisme de blocage se montant sur le carter de transmission peuvent se monter suivant des axes parallèles, ils peuvent donc être tous montés pendant la même opération d'assemblage.

Selon une caractéristique supplémentaire de l'invention, le pourtour externe du levier d'actionnement est constitué de surfaces parallèles à l'axe d'actionnement.

Selon une caractéristique supplémentaire de l'invention, le levier d'actionnement est formé d'une plaque découpée à partir d'une tôle d'épaisseur constante, le pourtour externe du levier d'actionnement étant obtenu à partir d'une tranche de découpe de la plaque.

Ainsi, le levier d'actionnement peut être réalisé à partir d'un processus de fabrication simple et économique.

Selon une caractéristique supplémentaire de l'invention, la lame flexible se déforme élastiquement et/ou radialement en parcourant le pourtour externe du levier d'actionnement.

Selon une caractéristique supplémentaire de l'invention, la lame flexible est formée d'un seul tenant dans une bande de matériau métallique, notamment dans une tôle d'acier.

Ainsi le processus de fabrication est simple et économique : à partir d'une tôle d'épaisseur constante, typiquement comprise entre 0,5 et 2 mm, une opération de découpage, par exemple de découpage par presse, est réalisée pour découper les contours extérieurs et intérieurs de la lame flexible, suivie d'une opération de pliage pour lui conférer la forme en V.

Selon une caractéristique supplémentaire de l'invention, la lame flexible est fabriquée dans un métal ayant subi un traitement de durcissement, notamment une carbonitruration, une nitruration, une cémentation ou une trempe.

Cette caractéristique permet d'augmenter la résistance mécanique de la lame flexible nécessaire pour résister aux sollicitations mécaniques transmises au mécanisme de blocage.

Selon une caractéristique supplémentaire de l'invention, la lame flexible présente une raideur comprise entre 10 et 50 N/mm.

Selon une caractéristique supplémentaire de l'invention, la lame flexible effectue radialement un déplacement radial lorsque l'organe de positionnement coopère avec le pourtour externe du levier d'actionnement, le déplacement radial variant entre 1 et 10 mm quelle que soit la position angulaire du levier d'actionnement.

Selon une caractéristique supplémentaire de l'invention, le levier d'actionnement est entraîné en rotation, directement ou indirectement, par un arbre rotor d'un moteur électrique.

En outre l'invention a pour objet un système de transmission comprenant un arbre équipé d'au moins un évidement de verrouillage et un mécanisme de blocage tel que décrit précédemment.

### Brève description des figures

La figure 1 est une vue de face d'un mécanisme de blocage selon un mode de réalisation de l'invention.
La figure 2 est une vue en perspective de la figure 1.
La figure 3 est une vue en perspective d'une partie du mécanisme de blocage selon un mode de réalisation de l'invention.
La figure 4 est une vue de dessus de la figure 3.
La figure 5 est une vue en perspective d'un organe de positionnement selon un mode de réalisation de l'invention.
La figure 6 est une vue de face de la figure 5.
La figure 7 est une vue en perspective d'un levier d'actionnement selon un mode de réalisation de l'invention.

### Description des modes de réalisation

Sur toutes les figures, les éléments identiques ou assurant la même fonction portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

Un mécanisme de blocage en rotation d'un arbre d'un véhicule comprend notamment : un cliquet mobile, un dispositif de poussée, un levier d'actionnement et un organe de positionnement. Le mécanisme de blocage est notamment destiné à immobiliser un véhicule, par exemple une voiture, dans un état stationné. Les différents éléments du mécanisme de blocage de réalisation seront présentés ci-dessous.

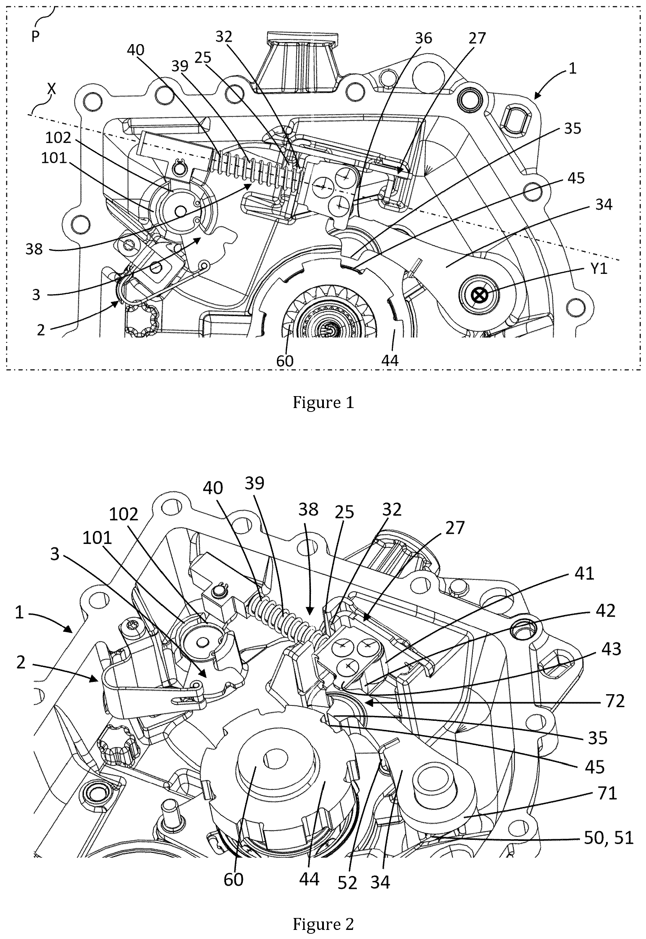

Les figures 1 et 2 illustrent un mécanisme de blocage selon un mode de réalisation de l'invention. Dans ces figures, le mécanisme de blocage comprend un cliquet mobile 34 situé dans un carter de transmission 1 (partiellement représenté). Le cliquet mobile 34 peut être de forme allongée et peut présenter une première extrémité 71 et une deuxième extrémité 72 distante de la première extrémité 71.

La première extrémité 71 permet par exemple la fixation du cliquet mobile 34 sur le carter de transmission 1 tout en permettant le mouvement en rotation dudit cliquet mobile 34. C'est-à-dire que le cliquet mobile est monté pivotant dans un plan P autour d'un axe de pivotement Y1.

La deuxième extrémité 72 peut comprendre une surface de came 36 située sur une première face latérale du cliquet mobile 34. La deuxième extrémité 72 peut comprendre en outre un doigt de verrouillage 35 faisant sailli depuis une deuxième face latérale du cliquet mobile 34. Le doigt de verrouillage 35 est destiné, lorsque le mécanisme de blocage est enclenché, à s'insérer dans un évidement de verrouillage 45. L'évidement de verrouillage 45 est par exemple situé sur une roue à rochet 44 qui est apte à recevoir ledit doigt de verrouillage 35, et qui est fixée solidaire en rotation de l'arbre de transmission 60 (partiellement représenté) destiné à être bloquer en rotation.

Ainsi, le mécanisme de blocage varie entre une position de verrouillage dans laquelle le doigt de verrouillage 35 est engagé dans l'évidement de verrouillage 45 et une position libérée dans laquelle le doigt de verrouillage 35 est désengagé dudit évidement de verrouillage 45. Dans les figures 1 et 2, le mécanisme de blocage en rotation d'un arbre est représenté dans une position libérée.

Le cliquet mobile 34 peut comprendre en outre un ressort de torsion 50. Le ressort de torsion 50 est par exemple enroulé au niveau de la première extrémité 71 du cliquet mobile 34. Le ressort de torsion 50 peut comprendre une première extrémité 51 qui est en appui contre une surface d'appui du carter de transmission 1 et une deuxième extrémité 52 qui est en appui contre une surface d'appui du cliquet mobile 34. Le ressort de torsion 50 est agencé pour exercer un effort de rappel sur le cliquet mobile 34 afin de le rappeler vers la position libérée.

Le mécanisme de blocage comprend en outre un dispositif de poussée 38. Le dispositif de poussée 38 peut être guidé selon une direction longitudinale X par un rail de guidage 27 logé dans le carter de transmission 1. Dans les cas où le dispositif de poussée 38 est renvoyé en arrière par le cliquet mobile 34 lors de phases dynamiques, le dispositif de poussée 38 peut venir en butée contre une paroi latérale du rail de guidage 27, qui forme ainsi une butée anti-retour pour le dispositif de poussée 38. Le dispositif de poussée 38, est dans ce cas envoyé contre le cliquet mobile 34 par une force de rappel exercée par un ressort de traction 40. Cet effet peut se produire par exemple lors de tentatives d'engagement à trop haute vitesse. Au-delà d'une vitesse seuil, par exemple comprise entre 3 km/h et 5 km/h, le cliquet mobile 34 rebondit pour empêcher l'engagement, le dispositif de poussée 38 est alors renvoyé en butée. Le ressort 40 entoure une tige 39 du dispositif de poussée qui se développe à travers une première encoche 25 du carter de transmission 1 et une deuxième encoche 32 du rail de guidage 27.

Le dispositif de poussée 38 peut se présenter sous la forme d'un chariot mobile qui comprend par exemple un premier galet mobile 41 apte à se déplacer le long d'une paroi longitudinale 30 du rail de guidage 27. Le dispositif de poussée 38 peut comprendre en outre un suiveur de came 42 comportant un deuxième galet mobile qui est en contact avec la surface de came 36 du cliquet mobile 34 et apte à se déplacer le long de cette surface de came 36.

Le dispositif de poussée 38 peut comprendre en outre un ergot 43 situé au niveau de la deuxième extrémité du cliquet mobile 34. L'ergot 43 est destiné à retenir le cliquet mobile 34 dans le plan P.

Pour déplacer le cliquet mobile 34 dans la position de verrouillage, la tige 39 peut être déplacée à travers la deuxième encoche 32 du rail de guidage 27 déplaçant ainsi le dispositif de poussée 38 selon la direction longitudinale X. Le déplacement du dispositif de poussée 38 peut entraîner le déplacement du premier galet mobile 41 le long du rail de guidage 27 et le déplacement du suiveur de came 42 le long de la surface de came 36 du cliquet mobile 34. La surface de came 36 peut présenter une pente et le dispositif de poussée 38 peut donc exercer via son déplacement, une pression en direction de la surface de came 36 du cliquet mobile 34. Cette pression peut engendrer un déplacement en rotation de la deuxième extrémité du cliquet mobile 34 en direction d'un évidement de verrouillage de telle sorte que le doigt de verrouillage 35 peut s'engager dans un évidement de verrouillage présent par exemple sur une roue à rochet 44.

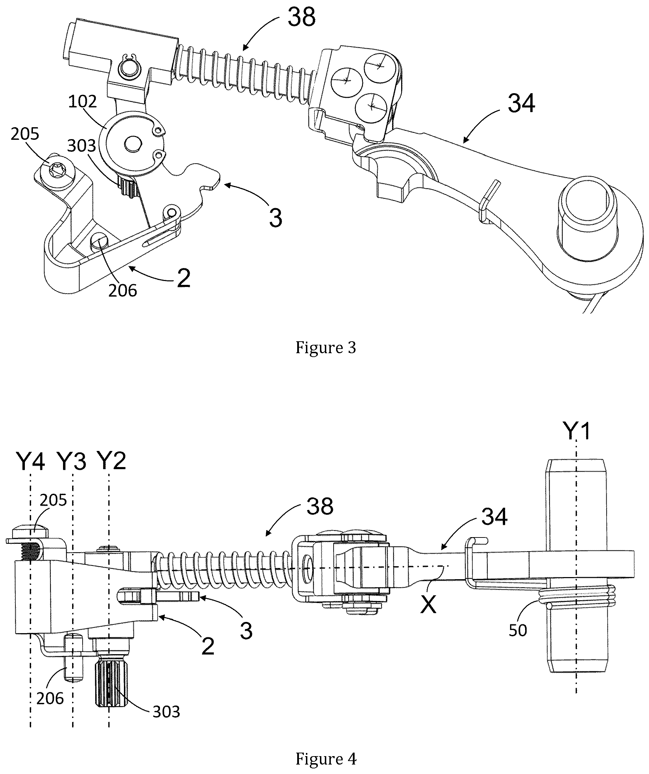

Les figures 3 à 7 illustrent plus particulièrement un levier d'actionnement 3 et un organe de positionnement 2 du mécanisme de blocage selon un mode de réalisation de l'invention.

Le levier d'actionnement 3 est monté pivotant autour d'un axe d'actionnement Y2 sur le carter de transmission 1. Un logement 101 (visible sur la figure 2) aménagé dans le carter de transmission 1 peut coopérer avec un anneau d'arrêt 102 afin de bloquer axialement le levier d'actionnement 3. Le levier d'actionnement 3 peut être entraîné en rotation par un arbre d'entraînement 303, l'arbre d'entraînement 303 coopérant en rotation à un arbre rotor d'un moteur électrique, notamment via des engrenages permettant de réaliser une réduction de vitesse. Le levier d'actionnement 3 peut être lié à la tige 39, par exemple via une liaison pivot, de telle sorte qu'une rotation du levier d'actionnement 3 autour de l'axe d'actionnement Y2 entraîne une translation suivant la direction longitudinale X du dispositif de poussée 38.

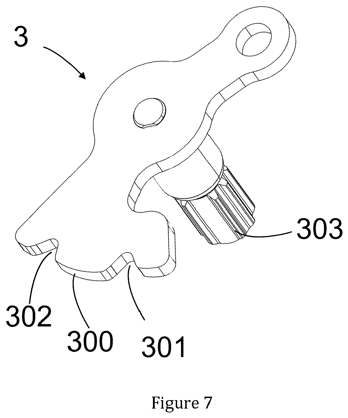

Comme illustré en figure 7, le levier d'actionnement 3 comprend en outre un pourtour externe 300 comportant une première encoche de positionnement angulaire 301 et une deuxième encoche de positionnement angulaire 302. Le levier d'actionnement 3 peut être formé d'une plaque découpée à partir d'une tôle d'épaisseur constante, par exemple une épaisseur comprise entre 3 et 6 mm, le pourtour externe 300 étant obtenu à partir d'une tranche de découpe de la plaque.

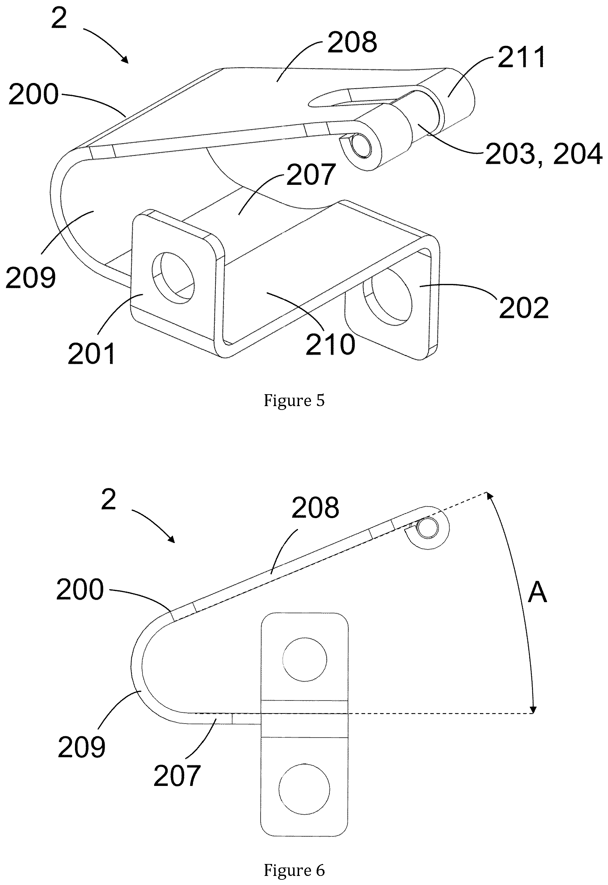

Comme illustré par les figures 3 et 5, l'organe de positionnement 2 coopère avec le pourtour externe du levier d'actionnement 3, l'organe de positionnement 2 comporte une surface d'appui 204 configurée pour s'engager dans la première encoche de positionnement angulaire 301 lorsque le cliquet mobile 34 est en position de verrouillage et dans la deuxième encoche de positionnement angulaire 302 lorsque le cliquet mobile 34 est en position libérée. L'organe de positionnement 2 permet ainsi de maintenir de manière stable et précise la position du mécanisme de blocage en position libérée et/ou en position de verrouillage.

Dans ce mode de réalisation, l'organe de positionnement 2 comporte une lame flexible 200 exerçant un effort, directement ou indirectement, sur le pourtour externe 300 du levier d'actionnement 3. Un élément roulant 203, par exemple un rouleau cylindrique, agencé sur la lame flexible 200 peut être configuré pour rouler sur le pourtour externe 300 du levier d'actionnement 3.

L'organe de positionnement 2 peut être fixé sur le carter de transmission 1 via une première patte de fixation pliée 201 et via une deuxième patte de fixation pliée 202 de la lame flexible 200, la première patte de fixation pliée 201 et la deuxième patte de fixation pliée 202 pouvant être décalées l'une de l'autre dans une direction parallèle à l'axe d'actionnement Y2. Avantageusement, la première patte de fixation pliée 201 et la deuxième patte de fixation pliée 202 peuvent être pliées à un angle de 90° à partir d'une première portion 210 de la lame flexible 200 et positionnées axialement de part et d'autre de ladite première portion 210 de la lame flexible 200. La première patte de fixation pliée 201 peut être pliée dans un sens opposé à la deuxième patte de fixation pliée 202.

Comme illustré sur les figures 3 et 4, un premier moyen de fixation 206, ici une goupille de centrage, peut coopérer avec un trou circulaire de la première patte de fixation pliée 201 pour limiter le déplacement de l'organe de positionnement 2 par rapport au carter de transmission 1 dans le plan perpendiculaire P à l'axe d'actionnement Y2. Avantageusement, un premier jeu diamétral très faible, typiquement entre 0,05 mm et 0,2 mm, est mis en place entre le trou circulaire et la goupille de centrage. Un deuxième moyen de fixation 205, ici une vis, peut coopérer avec la deuxième patte de fixation pliée 202 pour bloquer le déplacement de l'organe de positionnement 2 par rapport au carter de transmission 1 suivant un quatrième axe Y4 parallèle à l'axe d'actionnement Y2.

Comme illustré sur la figure 4, quatre axes peuvent être définis pour réaliser l'assemblage sur le carter de transmission 1 : l'axe d'actionnement Y2 du levier d'actionnement 3, l'axe de pivotement Y1 du cliquet mobile 34, le quatrième axe Y4 suivant lequel la vis 205 peut être assemblée et un troisième axe Y3 suivant lequel la goupille de centrage 206 peut être assemblée. Avantageusement, ces quatre axes peuvent être parallèles, ce qui permet de monter aisément tous ces composants au cours de la même opération d'assemblage.

Comme illustré sur les figures 5 et 6, la lame flexible 200 comprend une forme repliée sur elle-même pour constituer une forme en V. La forme en V peut comprendre une première paroi plane 207 et une deuxième paroi plane 208, un angle de pliage A étant établi entre la première paroi plane 207 et la deuxième paroi plane 208, l'angle de pliage A étant compris de préférence entre 0° et 40°, 30° dans l'exemple de la figure 6. Une paroi incurvée 209 peut relier la première paroi plane 207 et la deuxième paroi plane 208, la paroi incurvée 209 ayant un rayon de courbure compris entre 2 mm et 10 mm, 6,5 mm dans l'exemple de la figure 6. Avantageusement, le rayon de courbure de la paroi incurvée 209 peut être choisi en fonction de l'épaisseur la lame flexible 200 afin d'améliorer le compromis entre la raideur et la contrainte mécanique de celle-ci. Un ratio égal au rapport entre le rayon de courbure et l'épaisseur de la lame flexible 200 peut être établi, le ratio étant compris de préférence entre 2 et 8. Dans l'exemple de la figure 6, l'épaisseur de la lame flexible 200 est de 1,5 mm, le ratio est donc de 4,3.

La lame flexible 200 peut être formée d'un seul tenant dans une bande de matériau métallique. Dans l'exemple de la figure 6, la lame flexible 200 est réalisée à partir d'une bande d'acier qui est découpée par presse pour obtenir ses contours, puis pliée pour obtenir sa forme en V, les première et deuxième pattes de fixation pliées 201 et 202, et également une forme complémentaire 211 permettant de constituer une liaison pivot entre le rouleau cylindrique 203 et la lame flexible 200. La lame flexible 200 peut subir ensuite un traitement de durcissement afin d'augmenter sa tenue mécanique.

La première paroi plane 207 et la deuxième paroi plane 208 de la lame flexible 200 peuvent être parallèles à l'axe d'actionnement Y2. De plus, la forme de la lame flexible 200, notamment sa forme en V et/ou le choix de la valeur de l'angle de pliage A, peut être choisie de sorte à laisser libre un passage permettant l'assemblage du deuxième moyen de fixation 205 suivant le quatrième axe Y4 et du premier moyen de fixation 206 suivant le troisième axe Y3.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens, la présente invention étant définie par les revendications suivantes.

L'usage du verbe « comporter », « comprendre » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Mécanisme de blocage apte à être monté dans un carter de transmission (1) pour bloquer en rotation un arbre d'un véhicule équipé d'au moins un évidement de verrouillage (45), le mécanisme de blocage comprenant :
- un cliquet mobile (34) comprenant un doigt de verrouillage (35), le cliquet mobile (34) étant monté pivotant autour d'un axe de pivotement (Y1) entre une position de verrouillage dans laquelle le doigt de verrouillage (35) est engagé dans l'évidement de verrouillage (45) et une position libérée dans laquelle le doigt de verrouillage (35) est désengagé dudit évidement de verrouillage (45), le cliquet mobile (34) comprenant une surface de came (36) ;
- un dispositif de poussée (38) comportant un suiveur de came (42) apte à se déplacer sur la surface de came (36) afin de déplacer le cliquet mobile (34) de la position libérée vers la position de verrouillage ;
- un levier d'actionnement (3) monté pivotant autour d'un axe d'actionnement (Y2) et configuré pour déplacer le dispositif de poussée (38), le levier d'actionnement (3) comprenant un pourtour externe (300) comportant une première encoche de positionnement angulaire (301) et une deuxième encoche de positionnement angulaire (302) ; et
- un organe de positionnement (2) coopérant avec le pourtour externe (300) du levier d'actionnement (3), l'organe de positionnement (2) comportant une surface d'appui (204) configurée pour s'engager dans la première encoche de positionnement angulaire (301) lorsque le cliquet mobile (34) est en position de verrouillage et dans la deuxième encoche de positionnement angulaire (302) lorsque le cliquet mobile (34) est en position libérée ;
**caractérisé en ce que** l'organe de positionnement comporte une lame flexible (200) exerçant un effort, directement ou indirectement, sur le pourtour externe (300) du levier d'actionnement (3), la lame flexible (200) comprenant une forme repliée sur elle-même pour constituer en vue de profil une forme en V.

2. Mécanisme de blocage selon la revendication 1, dans lequel la forme en V comprend une première paroi plane (207) et une deuxième paroi plane (208), un angle de pliage (A) étant établi entre la première paroi plane (207) et la deuxième paroi plane (208), l'angle de pliage (A) étant compris entre 0° et 80°, l'angle de pliage (A) étant compris de préférence entre 0° et 40°.

3. Mécanisme de blocage selon la revendication 2, dans lequel une paroi incurvée (209) relie la première paroi plane (207) et la deuxième paroi plane (208).

4. Mécanisme de blocage selon la revendication 3, dans lequel la paroi incurvée (209) a un rayon de courbure compris entre 2 mm et 10 mm.

5. Mécanisme de blocage selon la revendication 3 ou 4, dans lequel sont établis un rayon de courbure de la paroi incurvée, une épaisseur de la lame flexible et un ratio égal au rapport entre le rayon de courbure et l'épaisseur de la lame flexible, le ratio étant compris entre 2 et 8.

6. Mécanisme de blocage selon l'une quelconque des revendications 2 à 5, dans lequel la première paroi plane (207) et la deuxième paroi plane (208) sont parallèles à l'axe d'actionnement (Y2).

7. Mécanisme de blocage selon l'une quelconque des revendications précédentes, dans lequel l'organe de positionnement (2) comporte un élément roulant (203) agencé sur la lame flexible (200), l'élément roulant (203) étant configuré pour rouler sur le pourtour externe (300) du levier d'actionnement (3).

8. Mécanisme de blocage selon l'une quelconque des revendications précédentes, dans lequel la lame flexible comprend une première patte de fixation pliée (201) et une deuxième patte de fixation pliée (202), les première et deuxième pattes de fixation pliées (201, 202) étant pliées à un angle de 90° à partir d'une première portion (210) de la lame flexible (200) et positionnées axialement de part et d'autre de ladite première portion (210) de la lame flexible (200).

9. Mécanisme de blocage selon la revendication 8, dans lequel la première patte de fixation pliée (201) est pliée dans un sens opposé à la deuxième patte de fixation pliée (202).

10. Mécanisme de blocage selon la revendication 8 ou 9, dans lequel la première patte de fixation pliée (201) et la deuxième patte de fixation pliée (202) sont décalées l'une de l'autre axialement dans une direction parallèle à l'axe d'actionnement (Y2).

11. Mécanisme de blocage selon l'une quelconque des revendications 8 à 10, dans lequel :
- un premier moyen de fixation (206), notamment une goupille de centrage, coopère avec la première patte de fixation pliée (201) pour limiter le déplacement de l'organe de positionnement (2) dans un plan perpendiculaire (P) à l'axe d'actionnement (Y2) ; et
- un deuxième moyen de fixation (205), notamment une vis, coopère avec la deuxième patte de fixation pliée (202) pour bloquer le déplacement de l'organe de positionnement (2) suivant un axe parallèle à l'axe d'actionnement (Y2).

12. Mécanisme de blocage selon la revendication 11, dans lequel la lame flexible (200) a une forme configurée pour laisser libre un passage suivant un axe parallèle à l'axe d'actionnement (Y2) permettant l'assemblage du premier et du deuxième moyen de fixation (205, 206).

13. Mécanisme de blocage selon l'une quelconque des revendications précédentes, dans lequel le pourtour externe (300) du levier d'actionnement (3) est constitué de surfaces parallèles à l'axe d'actionnement (Y2).

14. Mécanisme de blocage selon l'une quelconque des revendications précédentes, dans lequel la lame flexible (200) est formée d'un seul tenant dans une bande de matériau métallique, notamment dans une tôle d'acier.

15. Système de transmission comprenant un arbre équipé d'au moins un évidement de verrouillage (45) et un mécanisme de blocage selon l'une quelconque des revendications 1 à 14.

## Patentansprüche

1. Blockiermechanismus, der in einem Getriebegehäuse (1) montierbar ist, um eine Welle eines Fahrzeugs, die mit mindestens einer Verriegelungsaussparung (45) ausgestattet ist, in Rotation zu blockieren, wobei der Blockiermechanismus umfasst:
- eine bewegliche Sperrklinke (34), die einen Verriegelungsfinger (35) umfasst, wobei die bewegliche Sperrklinke (34) schwenkbar um eine Schwenkachse (Y1) zwischen einer Verriegelungsposition, in der der Verriegelungsfinger (35) in die Verriegelungsaussparung (45) eingreift, und einer gelösten Position, in der der Verriegelungsfinger (35) aus der Verriegelungsaussparung (45) ausgerückt ist, montiert ist, wobei die bewegliche Sperrklinke (34) eine Nockenfläche (36) umfasst;
- eine Schubvorrichtung (38) mit einem Nockenfolger (42), der sich auf der Nockenfläche (36) bewegen kann, um die bewegliche Sperrklinke (34) von der gelösten Position in die Verriegelungsposition zu bewegen;
- einen Betätigungshebel (3), der schwenkbar um eine Betätigungsachse (Y2) montiert ist und konfiguriert ist, um die Schubvorrichtung (38) zu bewegen, wobei der Betätigungshebel (3) einen äußeren Umfang (300) umfasst, der eine erste Winkelpositionierungskerbe (301) und eine zweite Winkelpositionierungskerbe (302) aufweist; und
- ein Positionierungsorgan (2), das mit dem äußeren Umfang (300) des Betätigungshebels (3) zusammenwirkt, wobei das Positionierungsorgan (2) eine Anlagefläche (204) aufweist, die konfiguriert ist, um in die erste Winkelpositionierungskerbe (301) einzugreifen, wenn die bewegliche Sperrklinke (34) in der Verriegelungsposition ist, und in die zweite Winkelpositionierungskerbe (302), wenn die bewegliche Sperrklinke (34) in der gelösten Position ist;
**dadurch gekennzeichnet, dass** das Positionierungsorgan eine flexible Lamelle (200) aufweist, die direkt oder indirekt eine Kraft auf den äußeren Umfang (300) des Betätigungshebels (3) ausübt, wobei die flexible Lamelle (200) eine auf sich selbst zurückgefaltete Form aufweist, um in der Profilansicht eine V-Form zu bilden.

2. Blockiermechanismus nach Anspruch 1, bei dem die V-Form eine erste ebene Wand (207) und eine zweite ebene Wand (208) umfasst, wobei ein Faltwinkel (A) zwischen der ersten ebenen Wand (207) und der zweiten ebenen Wand (208) festgelegt ist, wobei der Faltwinkel (A) zwischen 0° und 80° liegt, wobei der Faltwinkel (A) vorzugsweise zwischen 0° und 40° liegt.

3. Blockiermechanismus nach Anspruch 2, bei dem eine gekrümmte Wand (209) die erste ebene Wand (207) und die zweite ebene Wand (208) verbindet.

4. Blockiermechanismus nach Anspruch 3, bei dem die gekrümmte Wand (209) einen Krümmungsradius zwischen 2 mm und 10 mm aufweist.

5. Blockiermechanismus nach Anspruch 3 oder 4, bei dem ein Krümmungsradius der gekrümmten Wand, eine Dicke der flexiblen Lamelle und ein Verhältnis, das dem Verhältnis zwischen dem Krümmungsradius und der Dicke der flexiblen Lamelle entspricht, festgelegt sind, wobei das Verhältnis zwischen 2 und 8 liegt.

6. Blockiermechanismus nach einem der Ansprüche 2 bis 5, bei dem die erste ebene Wand (207) und die zweite ebene Wand (208) parallel zur Betätigungsachse (Y2) sind.

7. Blockiermechanismus nach einem der vorhergehenden Ansprüche, bei dem das Positionierungsorgan (2) ein Rollelement (203) aufweist, das auf der flexiblen Lamelle (200) angeordnet ist, wobei das Rollelement (203) konfiguriert ist, um auf dem äußeren Umfang (300) des Betätigungshebels (3) zu rollen.

8. Blockiermechanismus nach einem der vorhergehenden Ansprüche, bei dem die flexible Lamelle eine erste gefaltete Befestigungslasche (201) und eine zweite gefaltete Befestigungslasche (202) umfasst, wobei die erste und zweite gefaltete Befestigungslasche (201, 202) in einem Winkel von 90° von einem ersten Abschnitt (210) der flexiblen Lamelle (200) gefaltet und axial auf beiden Seiten des ersten Abschnitts (210) der flexiblen Lamelle (200) positioniert sind.

9. Blockiermechanismus nach Anspruch 8, bei dem die erste gefaltete Befestigungslasche (201) in eine Richtung gefaltet ist, die der zweiten gefalteten Befestigungslasche (202) entgegengesetzt ist.

10. Blockiermechanismus nach Anspruch 8 oder 9, bei dem die erste gefaltete Befestigungslasche (201) und die zweite gefaltete Befestigungslasche (202) axial in einer Richtung parallel zur Betätigungsachse (Y2) zueinander versetzt sind.

11. Blockiermechanismus nach einem der Ansprüche 8 bis 10, bei dem:
- ein erstes Befestigungsmittel (206), insbesondere ein Zentrierstift, mit der ersten gefalteten Befestigungslasche (201) zusammenwirkt, um die Bewegung des Positionierungsorgans (2) in einer Ebene senkrecht (P) zur Betätigungsachse (Y2) zu begrenzen; und
- ein zweites Befestigungsmittel (205), insbesondere eine Schraube, mit der zweiten gefalteten Befestigungslasche (202) zusammenwirkt, um die Bewegung des Positionierungsorgans (2) entlang einer Achse parallel zur Betätigungsachse (Y2) zu blockieren.

12. Blockiermechanismus nach Anspruch 11, bei dem die flexible Lamelle (200) eine Form aufweist, die konfiguriert ist, um einen Durchgang entlang einer Achse parallel zur Betätigungsachse (Y2) freizulassen, der die Montage des ersten und des zweiten Befestigungsmittels (205, 206) ermöglicht.

13. Blockiermechanismus nach einem der vorhergehenden Ansprüche, bei dem der äußere Umfang (300) des Betätigungshebels (3) aus Flächen besteht, die parallel zur Betätigungsachse (Y2) sind.

14. Blockiermechanismus nach einem der vorhergehenden Ansprüche, bei dem die flexible Lamelle (200) einstückig aus einem Streifen metallischen Materials, insbesondere aus einem Stahlblech, geformt ist.

15. Übertragungssystem, umfassend eine Welle, die mit mindestens einer Verriegelungsaussparung (45) ausgestattet ist, und einen Blockiermechanismus nach einem der Ansprüche 1 bis 14.

## Claims

1. Locking mechanism capable of being mounted in a transmission housing (1) to block rotation of a shaft of a vehicle equipped with at least one locking recess (45), the locking mechanism comprising:
- a movable pawl (34) comprising a locking finger (35), the movable pawl (34) being mounted pivoting around a pivot axis (Y1) between a locking position in which the locking finger (35) is engaged in the locking recess (45) and a released position in which the locking finger (35) is disengaged from said locking recess (45), the movable pawl (34) comprising a cam surface (36);
- a pushing device (38) having a cam follower (42) capable of moving on the cam surface (36) in order to move the movable pawl (34) from the released position to the locking position;
- an actuation lever (3) mounted pivoting around an actuation axis (Y2) and configured to move the pushing device (38), the actuation lever (3) comprising an external perimeter (300) having a first angular positioning notch (301) and a second angular positioning notch (302); and
- a positioning member (2) cooperating with the external perimeter (300) of the actuation lever (3), the positioning member (2) having a support surface (204) configured to engage in the first angular positioning notch (301) when the movable pawl (34) is in the locking position and in the second angular positioning notch (302) when the movable pawl (34) is in the released position;
**characterized in that** the positioning member includes a flexible blade (200) exerting a force, directly or indirectly, on the external perimeter (300) of the actuation lever (3), the flexible blade (200) comprising a form folded upon itself to constitute, in profile view, a V-shape.

2. Locking mechanism according to claim 1, wherein the V-shape comprises a first flat wall (207) and a second flat wall (208), a folding angle (A) being established between the first flat wall (207) and the second flat wall (208), the folding angle (A) being between 0° and 80°, the folding angle (A) being preferably between 0° and 40°.

3. Locking mechanism according to claim 2, wherein a curved wall (209) connects the first flat wall (207) and the second flat wall (208).

4. Locking mechanism according to claim 3, wherein the curved wall (209) has a radius of curvature between 2 mm and 10 mm.

5. Locking mechanism according to claim 3 or 4, wherein a radius of curvature of the curved wall, a thickness of the flexible blade, and a ratio equal to the ratio between the radius of curvature and the thickness of the flexible blade are established, the ratio being between 2 and 8.

6. Locking mechanism according to any one of claims 2 to 5, wherein the first flat wall (207) and the second flat wall (208) are parallel to the actuation axis (Y2).

7. Locking mechanism according to any one of the preceding claims, wherein the positioning member (2) includes a rolling element (203) arranged on the flexible blade (200), the rolling element (203) being configured to roll on the external perimeter (300) of the actuation lever (3).

8. Locking mechanism according to any one of the preceding claims, wherein the flexible blade comprises a first folded mounting tab (201) and a second folded mounting tab (202), the first and second folded mounting tabs (201, 202) being folded at an angle of 90° from a first portion (210) of the flexible blade (200) and positioned axially on either side of said first portion (210) of the flexible blade (200).

9. Locking mechanism according to claim 8, wherein the first folded mounting tab (201) is folded in a direction opposite to the second folded mounting tab (202).

10. Locking mechanism according to claim 8 or 9, wherein the first folded mounting tab (201) and the second folded mounting tab (202) are offset from each other axially in a direction parallel to the actuation axis (Y2).

11. Locking mechanism according to any one of claims 8 to 10, wherein:
- a first fastening means (206), particularly a centering pin, cooperates with the first folded mounting tab (201) to limit the movement of the positioning member (2) in a plane perpendicular (P) to the actuation axis (Y2); and
- a second fastening means (205), particularly a screw, cooperates with the second folded mounting tab (202) to block the movement of the positioning member (2) along an axis parallel to the actuation axis (Y2).

12. Locking mechanism according to claim 11, wherein the flexible blade (200) has a shape configured to leave free a passage along an axis parallel to the actuation axis (Y2) allowing the assembly of the first and second fastening means (205, 206).

13. Locking mechanism according to any one of the preceding claims, wherein the external perimeter (300) of the actuation lever (3) is constituted of surfaces parallel to the actuation axis (Y2).

14. Locking mechanism according to any one of the preceding claims, wherein the flexible blade (200) is formed as a single piece from a strip of metallic material, particularly from a steel sheet.

15. Transmission system comprising a shaft equipped with at least one locking recess (45) and a locking mechanism according to any one of claims 1 to 14.
